# EUROPEAN PATENT SPECIFICATION

(11) **EP 2 814 650 B1**
(45) Date of publication and mention of the grant of the patent: **13.12.2017**
(21) Application number: 13735766.1
(22) Date of filing: 11.01.2013
(51) Int. Cl.: B29C 33/42, B29C 51/30

(54) **DEVICE FOR USE IN A MOULD FOR THERMOFORMING, THE MOULDS OF THE TYPE PROVIDING A CURVED DOUBLE-CURVED, DYNAMICALLY RECONFIGURABLE SURFACE WITH AN OPEN STRUCTURE**
VORRICHTUNG ZUR VERWENDUNG IN EINER WÄRMEHÄRTUNGSFORM SOWIE ENTSPRECHENDE FORM MIT DOPPELT GEKRÜMMTER UND DYNAMISCH REKONFIGURIERBARER OBERFLÄCHE MIT EINER OFFENEN STRUKTUR
DISPOSITIF DESTINÉ À ÊTRE UTILISÉ DANS UN MOULE POUR LE THERMOFORMAGE DU TYPE FOURNISSANT UNE SURFACE COURBÉE À DOUBLE COURBURE POUVANT ÊTRE RECONFIGURÉE DYNAMIQUEMENT PRÉSENTANT UNE STRUCTURE OUVERTE

(30) Priority: 13.01.2012 DK 201200035
(43) Date of publication of application: 24.12.2014
(73) Proprietor: Adapa ApS, 9000 Aalborg (DK)
(72) Inventor: RAUN, Christian, villa 261 Dubai (AE)
(74) Representative: Høiberg P/S
(86) International application number: PCT/DK2013/050010
(87) International publication number: WO 2013/104369

(56) References cited:
- GB-A- 2 268 699
- US-A- 4 527 783
- US-A- 4 897 102
- US-A1- 2005 064 148
- US-A1- 2005 064 148

## Description

The present invention relates to a device for use in a mould for thermoforming, the moulds of the type providing a curved, double-curved, dynamically reconfigurable surface with an open structure as defined in the preamble of claim 1.

A device of such kind is known from US 2005/064148A1.

Digitally-controlled moulds that have the ability to produce a physical representation of a digitally designed surface quickly and precisely, based on data from a CAD program are advantageous when producing series of unique curved and double-curved blanks.

The most widely used technique for production of individual moulds from digital drawings is to shape the mould from a block of suitable material using a CNC machine. This is an extended process when a precise surface is required, and there is a lot of waste of both energy and materials. This means that moulds are becoming more expensive, due to increasing costs of both labour and materials. It has also become clearer that a greater range of curved designs is required, which in turn requires a greater range of moulds. Costs also therefore mean that these solid moulds are not suitable for short production runs of specialised moulds, or for experimental and developmental work, where a number of different moulds may have to be tried before a final production purpose is found.

When making blanks with fairly uniform or related shape, it may, therefore, be advantageous with a mould that can assume various shapes quickly and without waste. A branch of such dynamically reconfigurable thermoforming moulds includes moulds that are intended to create even points on single- and double-curved surfaces for use in e.g. production of individually manufactured facade elements in organically-shaped architecture. A number of attempts have been made to produce such a mould, and all of them shared a common factor of a large or small number of actuators, each of which defines a point on a surface. One end of the actuators is fixed to a frame, and membranes or plates are attached to their free ends, if necessary supported by a network of flexible profiles that are intended to form a surface that can be used for casting, etc.

FR 2612545 A and US 5,851,563 describe a mould apparatus in which a number of actuators are arranged in a rectangular pattern, controlled individually in the longitudinal direction by a computer/processor. On a ball joint on the free end of each actuator a rectangular plate is fitted, partly overlapping adjacent plates in such a way that the plates together form a sealed surface. The surface so formed is thus divided up into large or small surfaces, depending on the number of actuators and their common spacing. One problem with the prior art apparatus is that only when there is a large number of closely-spaced actuators will the surface produced appear uniform, but will still consist of a number of flat facets, as the rectangular plates will not provide even transitions and continual curves. In addition to that, closely-spaced actuators is a significantly more expensive solution.

GB 2268699 A describes an apparatus for forming glass fibre-reinforced plastic laminates, in which an elastically deformable material is supported by a number of distributed actuators. The addition of fibres in the laminate achieves rigidity, and the actuators are used to force the basically flat laminate to assume a single- or double-curved shape. This takes place in several stages, in which the addition of the fibre adds rigidity to the laminate prior to a deformation a number of times, after which further fibre is added and the laminate is cured so that it maintains the new shape. In this apparatus it is possible, the patent indicates, to achieve an even surface, in relation to the aforementioned mould apparatus, with continued curves with a spacing between the actuators of 50 cm to 100 cm, as the rigidity of the laminate results in an interpolation between the points defined by the actuators. One advantage with the prior art apparatus is that an even, continual surface is achieved using relatively few actuators. One problem with the apparatus is that the surface precision depends on the ability during the process to control the rigidity of the laminate, which means that the apparatus can only be used for production of laminates. In addition, the fine level of control of rigidity requires a relatively high, and cost-increasing, complexity of machinery, processes and calculations.

US 4,522,641 indicates a process for production of three-dimensional glass elements in which a rectangular grid of interwoven elastically deformable supports are connected in nodal points to an underlying adjustable system of e.g. actuators. When deflecting the grid under the influence of the underlying adjustable system, the rigidity of the interwoven supports forms the curves in the direction of the grid, between the nodal points defined by the underlying adjustable system. A sheet or plate of elastically deformable material is placed in multiple layers over the grid, where it provides a sealed and heat-insulated surface that can be used to cast glass elements. One problem with this method is that the elastically deformable material that is used to even out between the grid's interwoven supports makes it impossible to ventilate below the glass surface, as this is supported by a sealed heat-insulating surface. As the potential deflection of the sheet's elastically deformable material has its limits, this will limit the opportunities for moulding using this mould.

The object of this invention is to provide a device of the type described in the introduction that will provide an easy and fast process for creating a single- or double-curved surface using few actuators in relation to the possible curves.

A further object of the invention is that the established closely-spaced points on the surface are evenly and uniformly distributed with continual curves in all directions.

A still further object of the invention is to be able to ventilate above, below and between the points on the surface.

According to the invention, these objects are achieved by a device according to claims 1.

Thus, the double-curved dynamically reconfigurable surface, instead of consisting of well-defined points, is actually formed by interpolation between a number of parallel continuous line-shaped rods that make up an infinite number of points, which produces a more even surface than that which is obtainable using the prior art segmented and/or interwoven supports.

In order to achieve varying rigidity of the flexible system in deflections around the respective axes from the plane defined by the points formed on a surface, the internally relatively angled layers of the rod- and/or ribbon-shaped elements in the device according to the invention can vary in thickness or rigidity.

In this way, varied rigidity is achieved in the respective layers' directions, as the individual layers are internally relatively angled, and there is a gradation of rigidity in the layers as required.

With the intention of achieving an even surface, the device incorporating the flexible system of internally relatively angled layers of spaced point-supported parallel continuous rod- and/ribbon-shaped elements of elastically deformable material must be arranged in such a way that they form support points with variable spacing between adjacent support points, the spacing ranging from 0 to 100 cm.

Thus, a distribution of the support points is achieved on the surface that will give a located and processed thermo-mouldable material an even deflection.

The curved, dynamically reconfigurable double-curved surface with an open structure can also advantageously be provided using an underlying flexible system consisting of internally displaceable, rod- and/or ribbon-shaped elements of elastically deformable material arranged in two or more internally relatively angled layers that, in the device's usage state, are deflected and can cause relative displacements between the rod- or ribbon-shaped elements.

This extremely open, grid-shaped structure that occurs between the internally relatively angled layers of rod- and/or ribbon-shaped elements of elastically deformable material, permits good ventilation below and within the dynamically reconfigurable surface, and at the same time as its surface is evenly curved with good support for the surface, or a flexible coating applied to it.

For the purpose of creating a dynamic reconfiguration of the internally displaceable rod- and/or ribbon-shaped elements of elastically deformable material from a given shape by causing it to deflect, the deflection of the internally displaceable rod- and/or ribbon-shaped elements of elastically deformable material from an initial shape can be performed by the application of a force resulting from the movable free ends of a number of linear actuators, e.g. of the electromechanical type, to which the rod- and/or ribbon-shaped elements of elastically deformable material are mechanically connected in such a way that the position of a given point on the surface is determined from the position of the free end of an associated given actuator.

This makes it possible to carry out a reconfiguration of the initiating shape in a well-defined way, in which a set of the defined surface's points may be known, based on the positions of the actuators.

To cause the actuators to assume specified lengths with the intention of achieving a pre-defined single- or double-curved surface, the device according to the invention can be provided with registration units that register data regarding the positions of the free ends of the respective linear actuators that are mechanically connected to the rod- or ribbon-shaped elements of elastically deformable material, the data being registered and sent to a computer processing unit with signal sensors for controlling the movement of the individual actuators' free ends, and thus the point in the flexible system that belongs to the free end of the actuator, to a pre-defined position.

Thereby, each individual actuator can independently be brought to assume a pre-defined position which means that the points on the surface that are formed by the flexible system can be made to create a course through a series of defined points, that could, for example, be read off from a digital presentation of a surface.

An especially preferred embodiment of the device according to the invention is characterised in that the ribbon-shaped elements of elastically deformable material in internally relatively angled layers at the first retaining mechanisms are displaceably and/or tiltably journaled to the various free ends of the actuators, and that on the ribbon-shaped elements between the actuators there are second displaceably journaled retaining mechanisms and third displaceably journaled retaining mechanisms for spaced, parallel rod-shaped elements of elastically deformable material, in which retaining mechanisms the spaced, parallel rod- and/or ribbon-shaped elements of elastically deformable material, are displaceably journaled, and which retaining mechanisms on the opposite side of the ribbon-shaped elements of elastically deformable material include a fourth retaining mechanism for spaced, parallel rod-shaped elements that are angled relatively to the ribbon-shaped elements.

To ensure an even distribution of the rod- and/or ribbon-shaped elements of elastically deformable material on the reconfigurable double-curved surface during deflection, the rod- and/or ribbon-shaped elements of elastically deformable material may be internally connected with springs, the number and location of which depend on the potential deflection of the deflected reconfigurable double-curved surface.

To ensure an even distribution of the rod- and/or ribbon-shaped elements of elastically deformable material on the reconfigurable double-curved surface during deflection at varying loads at least one of the springs' spring constants may be adjustable.

To enable rapid adjustment of the springs' spring constants, the spring constants for the springs may be individually adjustable by means of actuators connected to a control unit that is connected to a computer processing unit for controlling the respective springs' spring constants.

This enables rapid change between different material thicknesses of the blanks that are formed on the dynamically reconfigurable double-curved surface.

In the following, the invention will be explained further with reference to the drawings in which:
Fig. 1 is a perspective view of the device for use in a mould for thermoforming, for moulds of the type that provide a curved double-curved, dynamically reconfigurable surface,
Fig. 2 is a cross-section along the line A'-A', shown in Fig. 1
Fig. 3 is a perspective view of the device shown in Fig 1, in which part of the upper section is hidden, and
Fig. 4 is a detailed view of an embodiment of a first retaining mechanism for the ribbon-shaped elements of an elastically deformable material in internally angled layers.

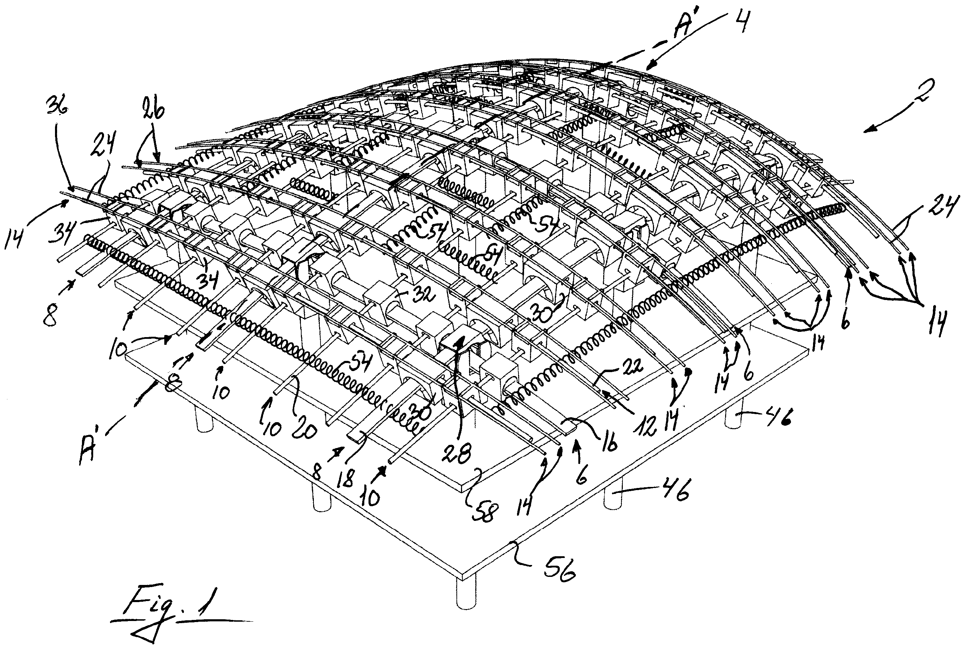

Fig. 1 is a perspective view of device 2 for use in a mould for thermoforming, for moulds of the type that provide a curved double-curved, dynamically reconfigurable surface, with an open structure.

The curved, double-curved dynamically reconfigurable surface 4 with an open structure is defined by a flexible system consisting of a number of angled layers 6, 8, 10, 12, 14 of spaced point-supported parallel rod- and/or ribbon-shaped elements 16, 18, 20, 22, 24 of elastically deformable material, in which the upward-facing, highest surfaces 26 of the rod- or ribbon-shaped elements 14, 16, 18, 20, 24, in the embodiment shown, the highest located surfaces 26 of the rod-shaped elements 24, define the double-curved reconfigurable surface 4 by relative displacements between the fixing points 28, 30, 32, 34 for the point-supported rod- or ribbon-shaped elements 14,16, 18, 20, 24.

In the embodiment shown in Fig. 1, etc., it is the layers 6, 8, consisting of the relatively angled ribbon-shaped elements 16, 18 that are supported in fixing points 28.

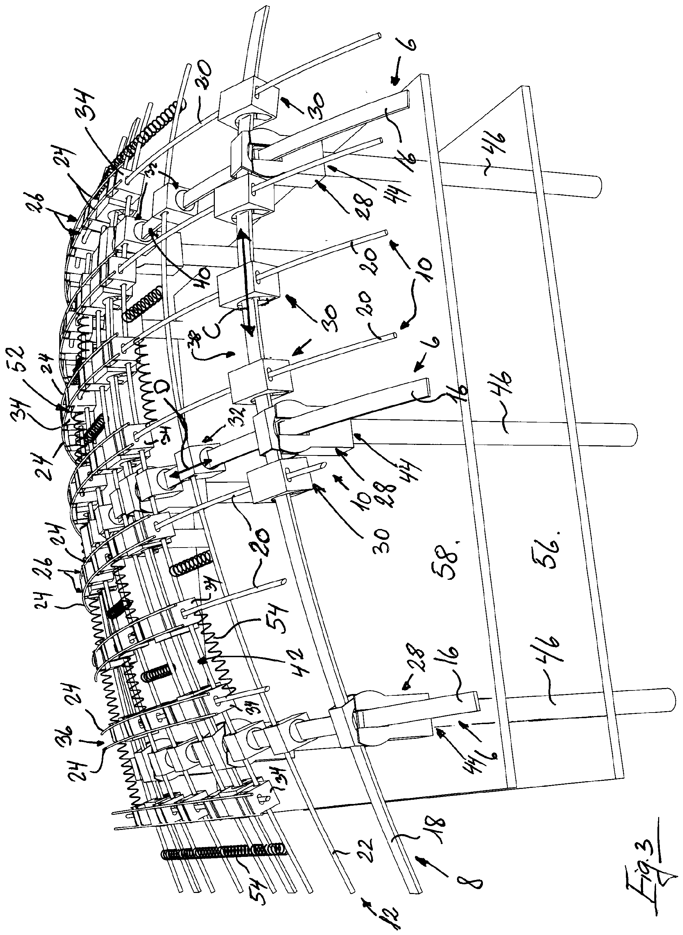

Layers 10, 12, that are made up of the rod-shaped elements 20, 22 consisting of elastically deformable material, are supported in the fixing points 30, 32, that are made up of brackets that are displaceably journaled in layers 8, 6 of the ribbon-shaped elements 18, 16, which are indicated by arrows C and D in Fig. 3.

Layer 14, which in the embodiment shown is made up of rod-shaped elements 24 of elastically deformable material, whose upward-facing, highest located surface 26 defines the curved, double-curved, dynamically reconfigurable surface 4, is journaled on brackets 34 that are displaceably journaled to the rod-shaped elements 20, 22. The rod-shaped elements 24 are spaced with a pre-defined fixed spacing 36, which is adapted to the relevant use of the mould, in which the device according to the invention is incorporated.

As can be seen from the shown embodiment of the device 2 according to the invention, layers 6, 8, 10, 12, 14 that are made from rod- or ribbon-shaped elements 16, 18, 20, 22, 24 are rotated relatively with an angle of 90 degrees in relation to each other. There may be other angles between the layers, and in other embodiments of the device 2 according to the invention, there may be more than the five shown layers 6, 8, 10, 12, 14 but for ease of viewing the invention in the following is described on the basis of an example where the device consists of the above five layers 6, 8, 10, 12, 14.

The internally relative angled layers 6, 8, 10, 12, 14 of the rod- and/or ribbon-shaped elements 16,18, 20, 22, 24 may vary in thickness and/or in rigidity, depending on which load they are calculated to be able to withstand.

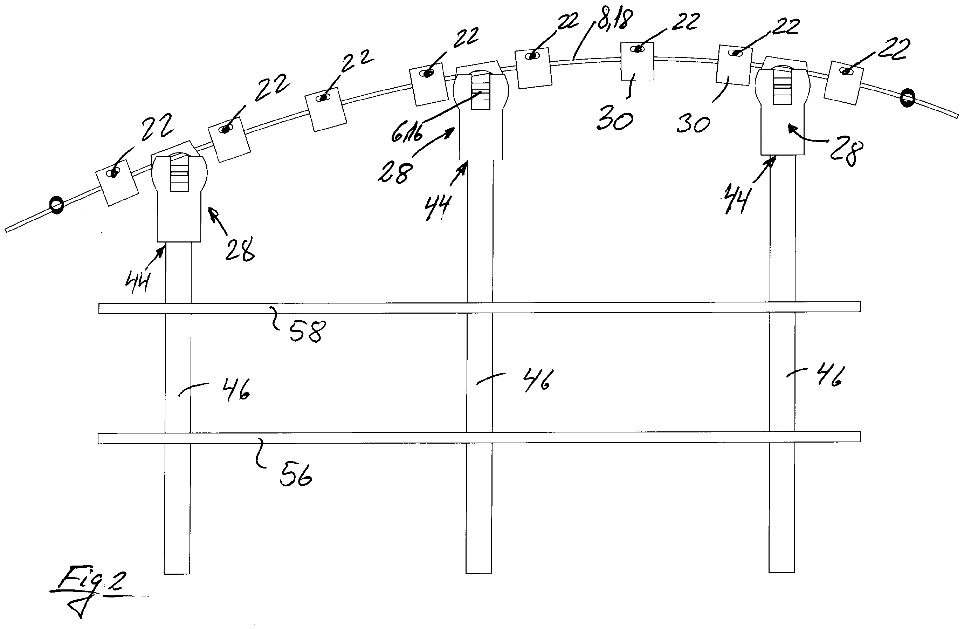

As can be seen in Fig. 2, etc. the flexible system of internally relatively angled layers 6, 8, 10, 12, 14 of spaced, point-supported parallel rod- and/or ribbon-shaped elements 16, 18, 20, 22, 24 of elastically deformable material is arranged in such a way that they form support points 28, 30, 32, 34, the spacing of which between the adjacent support points 30, 32, 34 may have varied spacing 38, 40, 42, the spacing ranging from 0 to 100 cm.

As can be most clearly seen in Fig. 2, the deflection of the internally displaceable, rod- and/or ribbon-shaped elements 6, 8, 10, 12, 14 of elastically deformable material from an initial shape under the influence of a force resulting from the movable free ends 44 of a number of actuators 26, e.g. of the electromagnetic type, to which the rod- and/ribbon-shaped elements 16, 18 of elastically deformable material are mechanically connected in such a way that the position of a given point 28 is determined by the position of the free end 44 of the associated given actuator 46.

It will, thus, be possible to provide a reconfigurable double-curved surface 4, defined by the upward-facing sides 26 of the rod- and/or ribbon-shaped elements 14 of elastically deformable material, by the actuators 24 performing internally relatively displacements, at the same time as there is a relative displacement of support points 30, 32, 34 that are displaceably journaled to the ribbon-shaped elements 18, 16 and rod-shaped elements 20, 22, respectively, both types consisting of elastically deformable material.

The device 2 according to the invention can also include non-shown registration units that register data concerning the positions of the free ends 44 of actuators 46, which are mechanically connected to the rod- and/or ribbon-shaped elements 16, 18 of elastically deformable material, respectively, the data being registered and sent to a non-shown data processing unit with sensors (not shown) for controlling the movement of the free ends 44 of the individual actuators, and thus to the point in the flexible system that belongs to the actuator's free end, to a preferred position.

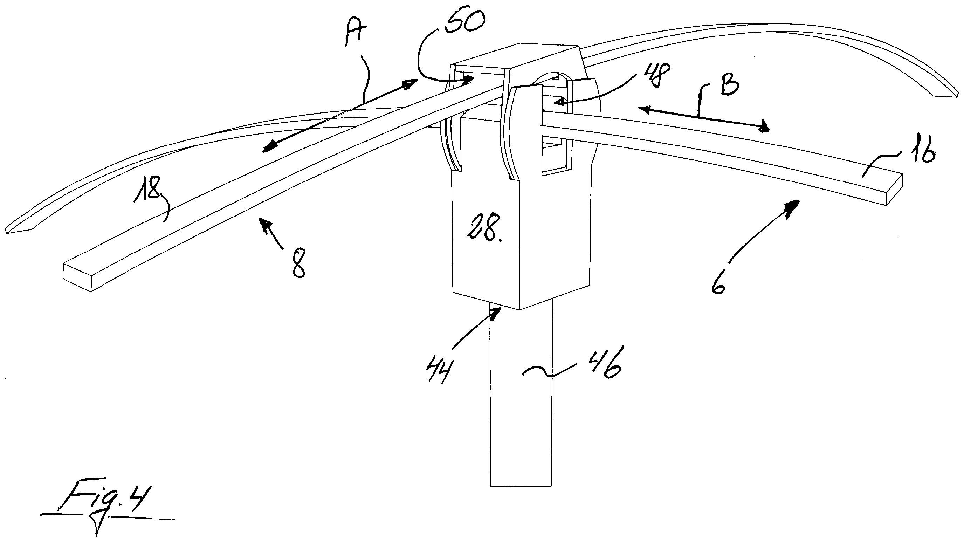

As shown in the embodiment of device 2 according to the invention in Fig. 3 and particularly Fig. 4, the free ends 44 of the actuators 46 are connected to ribbon-shaped elements 16, 18 of elastically deformable material, with first retaining mechanisms 28 with orthogonally-oriented, slit-shaped through-going apertures 48, 50, for reception of the internally angled layers of the ribbon-shaped elements 16, 18 of elastically deformable material, allowing for relative displacement between the free end 44 of actuator 46 and the ribbon-shaped elements 16, 18 of elastically deformable material, controlled in the slit-shaped apertures 48, 50, as indicated by arrows A and B in Fig. 4. Said retaining mechanisms 28 are so located that the ribbon-shaped elements 16, 18 of elastically deformable material will always be affected by a force at right angles, oriented in extension of the free end 44 of actuator 46.

On the ribbon-shaped elements 16, 18 of elastically deformable material there are also a number of displaceable journaled support points in the form of spaced second retaining mechanisms 30 and third retaining mechanisms 32 for further overlying rod-shaped elements 20, 22 of elastically deformable material, as is most clearly shown in Fig. 1, Fig. 2 and Fig. 3. How the spaced second retaining mechanisms 30 are displaceable on the ribbon-shaped elements 18, and the third retaining mechanisms 32 are displaceable on the ribbon-shaped elements 16 is indicated by the arrows C and D in Fig. 3. The rod-shaped elements 20 are displaceably journaled to the second retaining mechanisms 30, and the rod-shaped elements 22 are displaceably journaled to the third retaining mechanisms 32 to be able to take up deformations when sliding the free ends 22 of actuators 24.

On the rod-shaped elements 20, 22 there are further support points in the form of displaceably journaled fourth retaining mechanisms 34, on whose upward-facing side 52 there are journaled parallel rod-shaped elements 24, whose upward-facing sides 26 together form the curved, double-curved dynamically reconfigurable surface 4. The spacing 36, between the rod-shaped elements 24, is typically selected based on the use of the relevant mould, in which device 2 according to the invention is incorporated.

It is primarily the upward-facing sides 26 of the parallel rod-shaped elements 24 of elastically deformable material, journaled in the fourth retaining mechanisms 34, that together form the double-curved reconfigurable surface 4. It is obvious that said upward-facing sides of the rod-shaped elements 24 of elastically deformable material cannot, in themselves, make up the actual flat surface on which e.g. a liquid cast is distributed, but in such cases only serve as subsurface for e.g. a mat that is specially created for the purpose from suitable flexible material, on which the casting is actually performed. The upward-facing sides 26 of the rod-shaped elements 24 of elastically deformable material thus form a dynamically reconfigurable support for the above mat, whose shape adapts to the underlying shape made by the upward-facing sides 26 of the rod-shaped elements 24 made from elastically deformable material.

In other cases, where the device is used to mould blanks that are made temporarily flexible, e.g. by heating or other forces, the upward-facing sides 26 of the rod-shaped elements 24 of elastically deformable material, in a density appropriate to the purpose between the rod-shaped elements 24, could probably in themselves serve as a sub-surface for moulding said blanks.

As shown in the embodiment of device 2 according to the invention in Fig. 1 and Fig. 3, the rod- and/or ribbon-shaped elements 20, 22 of elastically deformed material are internally connected to springs 54, the number and location of which depend on the potential deflection of the deflected reconfigurable double-curved surface 4.

In a special embodiment of the device according to the invention, at least one of the springs' spring constants may be adjustable.

In a further, not illustrated, embodiment of device 2 according to the invention, all of the springs' spring constants may be individually adjustable by means of actuators that are not illustrated, connected to a control unit that is not illustrated, which is connected to a data processing unit not illustrated for controlling the springs' spring constants.

Device 2 also comprises the underlying plates 56, 58 through which the actuators 46 are led for the purpose of stiffening and protecting them.

## Claims

1. Device (2) for use in thermoforming moulds, for moulds of the type that provides a curved, double-curved dynamically reconfigurable surface (4) with an open structure, wherein the curved, double-curved dynamically reconfigurable surface (4) with an open structure is defined by interpolation between spaced rod- and/or ribbon-shaped elements (16, 18, 20, 22, 24) consisting of a flexible system comprising a number of angled layers (6, 8, 10, 12, 14) of spaced, point-supported parallel rod- and/or ribbon-shaped elements (16, 18, 20, 22, 24) of elastically deformable material, in which relatively offset anchor points (28, 30, 32, 34) for the point-supported rod- and/or ribbon-shaped elements (16, 18, 20, 22, 24) via the upward-facing, highest located surfaces (26) of the rod- or ribbon-shaped elements (24) define the double-curved reconfigurable surface (4),
**characterised in that**
the internally relatively angled layers (6, 8, 10, 12, 14) of the rod- and/or ribbon-shaped elements (16, 18, 20, 22, 24) vary in thickness and/or rigidity.

2. Device (2) according to claim 1, wherein the device comprises the flexible system of internally angled layers (6, 8, 10, 12, 14) of spaced point-supported parallel rod- and/or ribbon-shaped elements (16, 18, 20, 22, 24) of elastically deformable material, being arranged in such a way that they form support points (34) with variable spacing between adjacent support points (26), the spacing ranging from 0 to 100 cm.

3. Device (2) according to any of the claims 1 or 2, wherein the curved, double-curved dynamically reconfigurable surface (4) with an open structure is provided by an underlying flexible system (46, 28, 6, 8, 10, 12, 14) consisting of internally displaceable rod- and/or ribbon-shaped elements (16, 18, 20, 22, 24) of elastically deformable material arranged in two or more internally relatively angled layers (6, 8, 10, 12, 14) that in the device's usage state are deflected and can cause relative displacements between the rod- or ribbon-shaped elements (16, 18, 20, 22, 24).

4. Device (2) according to any of the claims 1-3, wherein the deflection of the internally displaceable rod- and/or ribbon-shaped elements (16, 18, 20, 22, 24) of elastically deformable material from an initiating shape is created by a force originating from the movable free ends (44) of a number of actuators (46), for example of the electromechanical type, to which the rod- and/or ribbon-shaped elements (16, 18, 20, 22, 24) of elastically deformable material are mechanically connected in such a way that the position of a given point on a surface is determined based on the position of the free end (44) of an associated given actuator (46).

5. Device (2) according to any of the claims 1-4, wherein the device comprises registration units for registration of data concerning the positions of the free ends (44) of the respective actuators (46) that are mechanically connected to support points (28, 30, 32, 34) for the rod- and/or ribbon-shaped elements (16, 18, 20, 22, 24) of elastically deformable material, the registered data being transmitted to a data processing unit with sensors for controlling the movement of the free ends (44) of the individual actuators, and thus the point in the flexible system that belongs to the actuator's free end, to a preferred position.

6. Device (2) according to any of the claims 1-5, wherein the rod- and/or ribbon-shaped elements (16, 18) of elastically deformable material in internally relatively angled layers at first retaining mechanisms (28) are displaceably and/or tiltably journaled to the displaceable free ends (44) of actuators (46), and that on the ribbon-shaped elements (16, 18) between the actuators (46) there are second displaceably journaled retaining mechanisms (30) and third displaceably journaled retaining mechanisms (32) for spaced, parallel rod-shaped elements (20, 22) of elastically deformable material, in which retaining mechanisms (30, 32) the spaced, parallel rod- and/or ribbon-shaped elements (20, 22) of elastically deformable material are displaceably journaled, and which retaining mechanisms (30 ,32) on the side opposite to the ribbon-shaped elements (16, 18) of elastically deformable material comprise a fourth retaining mechanism (34) for spaced, parallel rod-shaped elements (24) that are angled relatively to the ribbon-shaped elements (18).

7. Device (2) according to any of the claims 1-6, wherein the rod- and/or ribbon-shaped elements (20, 22) of elastically deformable material are mutual connected with springs (54), the number and location of which depend upon the potential deflection of the deflected reconfigurable double-curved surface (4).

8. Device (2) according to claim 7, wherein the spring constant of at least one of the springs' is adjustable.

9. Device (2) according to claim 8, wherein the spring constants for the springs (54) are individually adjustable by actuators which are connected to a control unit connected to a data processing unit for controlling the respective springs' spring constants.

## Patentansprüche

1. Vorrichtung (2) zur Verwendung beim Thermoformen, für Formen der Art, die eine gekrümmte, doppelt gekrümmte, dynamisch rekonfigurierbare Oberfläche (4) mit einer offenen Struktur bereitstellen,
wobei die gekrümmte, doppelt-gekrümmte, dynamisch rekonfigurierbare Oberfläche (4) mit einer offenen Struktur durch eine Erweiterung zwischen stab- und/oder bandförmigen Elementen (16, 18, 20, 22, 24) definiert ist, bestehend aus einem flexiblen System, umfassend mehrere abgewinkelte Schichten (6, 8, 10, 12, 14) beabstandeter, punktgestützter, paralleler stab- und/oder bandförmiger Elemente (16, 18, 20, 22, 24) aus elastisch verformbarem Material, in welchen relativ versetzte Befestigungspunkte (28, 30, 32, 34) für die punktgestützten stab- und/oder bandförmigen Elemente (16, 18, 20, 22, 24) über den nach oben gerichteten, höchstgelegenen Oberflächen (26) der stab- und/oder bandförmigen Elemente (24) die doppelt-gekrümmte, rekonfigurierbare Oberfläche (4) definieren,
**dadurch gekennzeichnet, dass**
die innen relativ abgewinkelten Schichten (6, 8, 10, 12, 14) der stab- und/oder bandförmigen Elemente (16, 18, 20, 22, 24) in Dicke und/oder Steifigkeit variieren.

2. Vorrichtung (2) nach Anspruch 1, wobei die Vorrichtung das flexible System innen abgewinkelter Schichten (6, 8, 10, 12, 14) beabstandeter, punktgestützter, paralleler stab- und/oder bandförmiger Elemente (16, 18, 20, 22, 24) aus elastisch verformbarem Material umfasst, die so angeordnet sind, dass sie Auflagepunkte (34) mit unterschiedlichen Abständen zwischen benachbarten Auflagepunkten (26) bilden, wobei sich die Intervalle von 0 bis 100 cm erstrecken.

3. Vorrichtung (2) nach einem der Ansprüche 1 oder 2,
wobei die gekrümmte, doppelt-gekrümmte, dynamisch rekonfigurierbare Oberfläche (4) mit einer offenen Struktur durch ein unterliegendes, flexibles System (46, 28, 6, 8, 10, 12, 14) bereitgestellt wird, bestehend aus innen verschiebbaren stab- und/oder bandförmigen Elementen (16, 18, 20, 22, 24) aus elastisch verformbarem Material, angeordnet in zwei oder mehr innen relativ abgewinkelten Schichten (6, 8, 10, 12, 14), die im Nutzungszustand der Vorrichtung gebogen sind und relative Verschiebungen zwischen den stab- und/oder bandförmigen Elementen (16, 18, 20, 22, 24) bewirken können.

4. Vorrichtung (2) nach einem der Ansprüche 1 - 3, wobei
die Biegung der innen verschiebbaren stab- und/oder bandförmigen Elemente (16, 18, 20, 22, 24) aus elastisch verformbarem Material aus einer Anfangsform durch eine Kraft erzeugt wird, die aus den beweglichen freien Enden (44) einer Zahl von Stellgliedern (46) stammt, zum Beispiel des elektromechanischen Typs, mit welchen die stab- und/oder bandförmigen Elementen (16, 18, 20, 22, 24) aus elastisch verformbarem Material in solcher Art mechanisch verbunden sind, dass die Position eines bestimmten Punkts auf der Oberfläche basierend auf der Position des freien Endes (44) eines zugehörigen Stellgliedes (46) bestimmt wird.

5. Vorrichtung (2) nach einem der Ansprüche 1 - 4, wobei
die Vorrichtung Registriereinheiten zur Registrierung von Daten umfasst, die die Positionen der freien Enden (44) der entsprechenden Stellglieder (46) betreffen, die mechanisch mit den Auflagepunkten (28, 30, 32, 34) für die stab- und/oder bandförmigen Elemente (16, 18, 20, 22, 24) aus elastisch verformbarem Material verbunden sind, wobei die registrierten Daten an eine Datenverarbeitungseinheit mit Sensoren zur Steuerung der Bewegung der freien Enden (44) der einzelnen Stellglieder, und somit des Punkts in dem flexiblen System, der zu dem freien Ende des Stellgliedes gehört, in eine bevorzugte Position, übertragen werden.

6. Vorrichtung (2) nach einem der Ansprüche 1 - 5, wobei
die stab- und/oder bandförmigen Elemente (16, 18) aus elastisch verformbarem Material in innen relativ abgewinkelten Schichten in ersten Haltemechanismen (28) verschiebbar und/oder kippbar in die verschiebbaren freien Enden (44) der Stellglieder (46) gelagert sind und dass sich auf den bandförmigen Elementen (16, 18) zwischen den Stellgliedern (46) zweite verschiebbar gelagerte Haltemechanismen (30) und dritte verschiebbar gelagerte Haltemechanismen (32) für beabstandete, parallele stabförmige Elemente (20, 22) aus elastisch verformbarem Material befinden, in welche Haltemechanismen (30, 32) die beabstandeten, parallelen stab- und/oder bandförmigen Elementen (20, 22) aus elastisch verformbarem Material verschiebbar gelagert sind und welche Haltemechanismen (30, 32) auf der Seite gegenüberliegend den bandförmigen Elementen (16, 18) aus elastisch verformbarem Material einen vierten Haltemechanismus (34) für beabstandete, parallele stabförmige Elemente (24), die gegenüber den bandförmigen Elementen (18) abgewinkelt sind, umfassen.

7. Vorrichtung (2) nach einem der Ansprüche 1 - 6, wobei
die stab- und/oder bandförmigen Elemente (20, 22) aus elastisch verformbarem Material gegenseitig mit Federn (54) verbunden sind, wobei die Anzahl und Position dieser von der potenziellen Biegung der gebogenen rekonfigurierbaren doppeltgekrümmten Oberfläche (4) abhängig sind.

8. Vorrichtung (2) nach Anspruch 7, wobei die Federkonstante von zumindest einer der Federn verstellbar ist.

9. Vorrichtung (2) nach Anspruch 8, wobei die Federkonstanten der Federn (54) durch Stellglieder einzeln verstellbar sind, welche mit einer Steuereinheit verbunden sind, die mit einer Datenverarbeitungseinheit zur Steuerung der Federkonstante der entsprechenden Federn verbunden sind.

## Revendications

1. Dispositif (2) destiné à être utilisé dans le thermoformage de moules, pour des moules du type qui permet de fournir une surface incurvée à double courbure (4), pouvant être reconfigurée dynamiquement, présentant une structure ouverte, dans lequel la surface incurvée à double courbure (4), pouvant être reconfigurée dynamiquement, présentant une structure ouverte, est définie par interpolation entre des éléments en forme de tiges et/ou de rubans espacés (16, 18, 20, 22, 24) consistant en un système flexible comprenant un certain nombre de couches inclinées (6, 8, 10, 12, 14) d'éléments en forme de tiges et/ou de rubans parallèles espacés (16, 18, 20, 22, 24) supportés en plusieurs points constitués d'un matériau déformable élastiquement, dans lequel des points d'ancrage décalés les uns par rapport aux autres (28, 30, 32, 34) pour les éléments en forme de tiges et/ou de rubans (16, 18, 20, 22, 24) supportés en plusieurs points par le biais des surfaces les plus élevées dirigées vers le haut (26) des éléments en forme de tiges ou de rubans (24) définissent la surface à double courbure (4) pouvant être reconfigurée,
**caractérisé en ce que**
les couches inclinées relativement vers l'intérieur (6, 8, 10, 12, 14) des éléments en forme de tiges et/ou de rubans (16, 18, 20, 22, 24) varient en épaisseur et/ou en rigidité.

2. Dispositif (2) selon la revendication 1, ledit dispositif comprenant le système flexible constitué de couches inclinées vers l'intérieur (6, 8, 10, 12, 14) d'éléments en forme de tiges et/ou de rubans parallèles espacés supportés en plusieurs points (16, 18, 20, 22, 24) constitués d'un matériau déformable élastiquement, qui sont disposés de sorte qu'ils forment des points de support (34) avec un espacement variable entre des points de support adjacents (26), l'espacement étant compris entre 0 et 100 cm.

3. Dispositif (2) selon l'une quelconque des revendications 1 ou 2, dans lequel la surface incurvée à double courbure (4), pouvant être reconfigurée dynamiquement, présentant une structure ouverte, est fournie par un système flexible sous-jacent (46, 28, 6, 8, 10, 12, 14) consistant en des éléments, pouvant être déplacés à l'intérieur, en forme de tiges et/ou de rubans (16, 18, 20, 22, 24) constitués d'un matériau déformable élastiquement, disposés en deux ou plus de deux couches inclinées relativement vers l'intérieur (6, 8, 10, 12, 14) qui, dans l'état d'utilisation du dispositif, sont déviés et peuvent provoquer des déplacements relatifs entre les éléments en forme de tiges ou de rubans (16, 18, 20, 22, 24).

4. Dispositif (2) selon l'une quelconque des revendications 1 à 3, dans lequel la déviation des éléments, pouvant être déplacés à l'intérieur, en forme de tiges et/ou de rubans (16, 18, 20, 22, 24) constitués d'un matériau déformable élastiquement, à partir d'une forme de départ, est créée par une force partant des extrémités libres mobiles (44) d'un certain nombre d'actionneurs (46), par exemple du type électro-mécanique, auxquels les éléments en forme de tiges et/ou de rubans (16, 18, 20, 22, 24) constitués d'un matériau déformable élastiquement sont reliés mécaniquement de telle sorte que la position d'un point donné sur une surface est déterminée sur la base de la position de l'extrémité libre (44) d'un actionneur associé donné (46).

5. Dispositif (2) selon l'une quelconque des revendications 1 à 4, ledit dispositif comprenant des unités d'enregistrement pour l'enregistrement des données concernant les positions des extrémités libres (44) des actionneurs respectifs (46) qui sont reliés mécaniquement à des points de support (28, 30, 32, 34) pour les éléments en forme de tiges et/ou de rubans (16, 18, 20, 22, 24) constitués d'un matériau déformable élastiquement, les données enregistrées étant transmises à une unité de traitement de données avec des capteurs permettant de commander le mouvement des extrémités libres (44) des actionneurs individuels, et donc du point dans le système flexible qui appartient à l'extrémité libre de l'actionneur, jusqu'à une position préférée.

6. Dispositif (2) selon l'une quelconque des revendications 1 à 5, dans lequel les éléments en forme de tiges et/ou de rubans (16, 18) constitués d'un matériau déformable élastiquement, disposés en couches inclinées relativement vers l'intérieur, au niveau de premiers mécanismes de fixation (28), sont journalisés de manière déplaçable et/ou inclinable par rapport aux extrémités libres déplaçables (44) des actionneurs (46), et, sur les éléments en forme de rubans (16, 18) entre les actionneurs (46), des deuxièmes mécanismes de fixation (30) journalisés de manière déplaçable et des troisièmes mécanismes de fixation (32) journalisés de manière déplaçable sont présents pour les éléments en forme de tiges parallèles espacés (20, 22) constitués d'un matériau déformable élastiquement, dans lequel les mécanismes de fixation (30, 32) des éléments en forme de tiges et/ou de rubans parallèles espacés (20, 22) constitués d'un matériau déformable élastiquement sont journalisés de manière déplaçable, et lesdits mécanismes de fixation (30, 32) sur le côté en regard des éléments en forme de rubans (16, 18) constitués d'un matériau déformable élastiquement comprennent un quatrième mécanisme de fixation (34) pour les éléments en forme de tiges parallèles espacés (24) qui sont inclinés par rapport aux éléments en forme de rubans (18).

7. Dispositif (2) selon l'une quelconque des revendications 1-6, dans lequel les éléments en forme de tiges et/ou de rubans (20, 22) constitués d'un matériau déformable élastiquement sont reliés mutuellement à des ressorts (54), dont le nombre et l'emplacement dépendent de la déviation possible de la surface à double courbure (4) déviée pouvant être reconfigurée.

8. Dispositif (2) selon la revendication 7, dans lequel la constante de rappel d'au moins un des ressorts est ajustable.

9. Dispositif (2) selon la revendication 8, dans lequel les constantes de rappel des ressorts (54) sont ajustables individuellement par les actionneurs qui sont reliés à une unité de commande reliée à une unité de traitement de données permettant de régler les constantes de rappel des ressorts respectifs.
